# EUROPÄISCHE PATENTSCHRIFT

(11) **EP 2 079 315 B1**
(45) Veröffentlichungstag und Bekanntmachung des Hinweises auf die Patenterteilung: **12.04.2017**
(21) Anmeldenummer: 07818770.5
(22) Anmeldetag: 08.10.2007
(51) Int. Cl.: A22C 13/00, B65D 81/28

(54) **ANTIMIKROBIELLE LEBENSMITTELVERPACKUNG**
ANTIMICROBIAL FOOD PACKAGING
EMBALLAGE ALIMENTAIRE ANTI-MICROBIEN

(30) Priorität: 06.10.2006 DE 102006047801
(43) Veröffentlichungstag der Anmeldung: 22.07.2009
(73) Patentinhaber: KUHNE ANLAGENBAU GmbH, 53757 St. Augustin/Menden (DE)
(72) Erfinder: SCHIFFMANN, Jürgen, 53773 Hennef (DE); SCHLÖSSER, Helmut, 53343 Wachtberg (DE)
(74) Vertreter: Kuhnen & Wacker
(86) Internationale Anmeldenummer: PCT/EP2007/008695
(87) Internationale Veröffentlichungsnummer: WO 2008/043501

(56) Entgegenhaltungen:
- EP-A- 1 403 192
- WO-A-2005/049699
- DE-A1- 10 319 006

## Beschreibung

Die vorliegende Erfindung betrifft eine ein- oder mehrschichtige Lebensmittelverpackung auf Kunststoffbasis, insbesondere eine Lebensmittelverpackung, bei der die Schicht oder wenigstens eine der Schichten wenigstens ein antimikrobiell deckendes Metall enthält.

Die Haltbarkeit Fleisch-, Wurst- und Käsewaren ist unter anderem aufgrund von Mikrobenwachstum in der Verpackung begrenzt und es wird ständig versucht, die Haltbarkeit dieser Waren durch geeignete Maßnahme zu verlängern. Zu den geeigneten Maßnahmen zählen dabei das Verpacken unter sterilen Bedingungen und die Beimischung von Konservierungsstoffen zu dem zu verpackenden Gut.

Eine weitere Möglichkeit das Wachstum und/oder die Vermehrung von mikrobiellen Keimen wirksam zu unterdrücken ist die Dotierung oder die Beschichtung der Verpackung mit entsprechend antimikrobiell wirksamen Stoffen. "Antimikrobiell" oder "antimikrobiell wirksam" beschreibt dabei in der vorliegenden Beschreibung allgemein die Wirksamkeit gegen Mikroorganismen, insbesondere gegen Bakterien, Hefen, Schimmel und Pilze. Von besonderer Bedeutung ist dabei die Wirksamkeit gegen Bakterien wie Colibakterien, Salmonellen und Staphylokokken.

Die Möglichkeiten der Dotierung und/oder Beschichtung sind jedoch mit einigen Nachteilen verbunden, da davon auszugehen ist, dass die verwendeten, antimikrobiell wirkenden Substanzen, wenn zum Teil auch in geringsten Mengen, vom Kunststoff an das verpackte Gut abgegeben werden. Die verwendeten Stoffe müssen daher für den menschlichen Organismus unbedenklich sein. Ein weiterer Nachteil ist, dass die Verarbeitung von thermoplastischen Verpackungsmaterialien bei relativ hohen Temperaturen erfolgt, was den Einsatz von in-situ zugesetzten organischen, antimikrobiell wirksamen Substanzen beschränkt, da diese sich unter den üblichen Verarbeitungstemperaturen irreversibel verändern.

Zur Vermeidung der vorstehend beschriebenen Nachteile bietet sich daher die Nutzung der an sich bekannten antimikrobiellen Wirksamkeit von Metall-Ionen an, insbesondere der antimikrobiellen Wirksamkeit von Silber-, Zinn-, Kupfer- und Zink-Ionen.

Es ist bekannt, dass Polymere durch Metall-Ionen insbesondere Ag⁺, Sn²⁺, Cu⁺ und Zn²⁺, an der Oberfläche antimikrobielle Wirkungen zeigen können. Hierfür ist jedoch eine gewisse Mobilität der Metall-Ionen in der polymeren Matrix eine Voraussetzung, die sich in der Regel dann erzielen lässt, wenn das Matrixmaterial eine gewisse Aufnahmefähigkeit für Wasser zeigt. Dieser grundsätzlich bekannte Effekt wird auch in der Verpackungsindustrie genutzt.

Die DE 193 006 A1 offenbart die Herstellung einer antimikrobiell ausgerüsteten Lebensmittelverpackung auf Kunststoffbasis, insbesondere für Wurstwaren. Offenbarungsgemäß werden dabei bevorzugt Silber-, Kupfer- oder Zink-Ionen jeweils in Form eines Metallsalzes vor der Extrusion der Primärschmelze zugesetzt, wobei es sich bei der Lebensmittelverpackung auf Kunststoffbasis um eine Hülle auf der Basis von Polyamid handelt.

Bei der vorstehend beschriebenen Lebensmittelverpackung ist insbesondere nachteilig, dass die antimikrobiell wirksamen Metall-Ionen in Form eines Salzes, ausschließlich offenbart sind Metalloxide, also als Feststoffe in die Metall-Ionen tragende Schicht eingearbeitet werden müssen. Um eine ausreichende Belastbarkeit in der Lebensmittelverpackung zu gewährleisten ist es erforderlich, dass die Metall-Ionen enthaltende Schicht eine Dicke aufweist, die zumindest um einiges größer ist als der Partikeldurchmesser der verwendeten Metalloxide. Gleichzeitig ist die Verarbeitung des so genannten Masterbatches, d. h. der Polymer-Metallsalz-Mischung, die zur Herstellung der Lebensmittelverpackung verwendet wird, mit Problemen der Sedimentation und Agglomeration verbunden. Insbesondere nachteilig ist im Stand der Technik somit allgemein die Verarbeitung der antimikrobiell wirkenden Metallsalze als Feststoff mit einem vergleichsweise großen Partikeldurchmesser im µm-Bereich.

Aufgabe der vorliegenden Erfindung ist es daher zumindest eine weitere Lebensmittelverpackung bereitzustellen, die einfach und günstig herstellbar ist, die eine ausreichende Haltbarkeit und Belastbarkeit bietet und die die aus dem Stand der Technik bekannten Probleme möglichst vermeidet.

Die vorliegende Aufgabe wird durch eine ein- oder mehrschichtige Lebensmittelverpackung auf Kunststoffbasis mit den Merkmalen des beigefügten Anspruchs 1 gelöst. Vorteilhafte Ausgestaltungen der Lebensmittelverpackung sind Gegenstand der auf den unabhängigen Anspruch rückbezogenen Ansprüche.

Der besondere Vorteil der Lebensmittelverpackung besteht darin, dass das wenigstens eine antimikrobiell wirkende Metall in äußerst fein und gleichmäßig verteilter Form in der das wenigstens eine Metall enthaltenden Schicht oder Folie enthalten ist und die Metallpartikel dabei einen sehr geringen Durchmesser im Nanometerbereich aufweisen, so dass die Schichtdicke der das mindestens eine Metall enthaltenden Folie oder Schicht besonders gering gehalten werden kann ohne beispielsweise die Festigkeitseigenschaften der Lebensmittelverpackung im Vergleich zu solchen aus dem Stand der Technik nachteilig zu beeinflussen.

In einer vorteilhaften Ausgestaltung der vorliegenden Erfindung liegt das Metall in Form eines Kolloids mit oligodynamischer Wirkung vor. Das verwendete Metall wird bevorzugt ausgewählt aus der Gruppe, bestehend aus Ag, Cu, Sn, Zn und Mischung derselben.

Obwohl die erfindungsgemäße Lebensmittelverpackung einen einschichtigen Aufbau aufweisen kann, ist die erfindungsgemäße Lebensmittelverpackung bevorzugt mehrschichtig aufgebaut, besonders bevorzugt weist eine mehrschichtige Lebensmittelverpackung einen drei-, fünf oder siebenschichtigen Aufbau auf.

Wenn die erfindungsgemäße Lebensmittelverpackung mehrschichtig aufgebaut ist, ist es besonders vorteilhaft, wenn die Lebensmittelverpackung einen unsymmetrischen Aufbau aufweist, weil z. B. bestimmte Funktionen einzelner Schichten, wie die Funktion als O₂-Sperre, bezogen auf den Schichtaufbau, dort angeordnet wird, wo sie ihre bestimmungsgemäße Wirkung am besten entfalten kann. Insbesondere ist es bevorzugt, dass das Metall in der dem Produkt zugewandten Schicht bzw. Schichten der Lebensmittelverpackung enthalten ist. Diese Anordnung ermöglicht es wirkungsvoll ein Eindringen von mikrobiellen Keimen sowie deren Vermehrung und oder Verteilung oder Migration auf der Oberfläche der verpackten Nahrungsmittel zumindest stark zu verzögern und einzuschränken.

Bei der erfindungsgemäßen Lebensmittelverpackung handelt es sich um Schlauchfolie oder aber um Flachfolie und ist in der Herstellung bevorzugt schlauchförmig ausgebildet, insbesondere nahtlos schlauchförmig. Derartige nahtlos schlauchförmige Lebensmittelverpackungen sind allgemein bekannt und werden üblicherweise durch ein Verfahren der Blasextrusion mit entsprechenden Ringdüsen hergestellt. Sie eignen sich insbesondere zur Verpackung von Wurstwaren, können aber auch zur Verpackung von, Fleisch, Käseprodukten und dergleichen verwendet werden.

Es ist allgemein bevorzugt, dass das antimikrobiell wirksame Metall, bezogen auf die metallhaltige Schicht, in einer Konzentration von 50 bis 500 ppm enthalten ist, bevorzugt von 70 bis 350 ppm und besonders bevorzugt von 100 bis 200 ppm.

Allgemein kann die erfindungsgemäße Lebensmittelverpackung oder wenigstens eine der Schichten derselben weiterhin einen Stabilisator enthalten, der vorzugsweise ausgewählt ist aus Polyvinylpyrrolidon (PVP), Natriumdodecylsulfat und Mischungen derselben.

Grundsätzlich kann die erfindungsgemäße Lebensmittelverpackung aus jedem geeigneten Polymer hergestellt werden, wobei aber insbesondere bevorzugt ist, dass die Schichten der Lebensmittelverpackung solche auf der Basis von Polyolefin, Haftmittel, EVOH, Polyvinylalkohol (PVA) und/oder Polyamid sind, wenn die Lebensmittelverpackung einen mehrschichtigen Aufbau aufweist. Die erfindungsgemäße Lebensmittelverpackung zeichnet sich besonders dadurch aus, dass sie von vergleichsweise geringer Dicke ist. Allgemein bevorzugt hat sie eine Dicke von insgesamt 10 bis 150 µm, besonders bevorzugt eine Dicke von 20 bis 80 µm.

Besonders bevorzugt ist es, wenn die metallhaltige Schicht der erfindungsgemäßen Lebensmittelverpackung eine Dicke von 2 bis 50 µm aufweist, insbesondere eine Dicke von 5 bis 20 µm, wobei diese Schichtdicke besonders vorteilhaft durch das erfindungsgemäße Verfahren realisierbar ist, das nachfolgend allgemein beschrieben wird.

In einer ebenfalls besonders bevorzugten Ausführungsform handelt es sich bei der erfindungsgemäßen Lebensmittelverpackung um eine Flachfolie, die sich beispielsweise als Zwischen- oder Trennlage für Wurst-, Fleisch- oder Käseaufschnitt verwenden lässt. Obwohl grundsätzlich ein unsymmetrischer Aufbau für eine solche Flachfolie denkbar ist, ist es bevorzugt, wenn die Flachfolie symmetrisch aufgebaut ist, so dass die beiden mit Lebensmittel in Kontakt kommenden Oberflächen aus einer metall enthaltenden Schicht gebildet sind.

Die erfindungsgemäße Lebensmittelverpackung wird allgemein in einem grundsätzlich geläufigen Extrusionsverfahren hergestellt, wobei es besonders vorteilhaft ist, dass das Metall in Form eines Kolloids während des Extrusionsvorgangs als konzentrierte Suspension zugegeben wird. Auf diese Weise lässt es sich durch intensives Durchmischen im Extruder besonders einfach und gleichmäßig in der entsprechenden Schicht der Lebensmittelverpackung verteilen, was eine Vorraussetzung für einen guten Wirkungsgrad darstellt. Wie nachfolgend näher beschrieben wird als Ausgangssubstanz eine Lösung eines entsprechenden Metallsalzes verwendet, wobei die Metallkationen unter Ausbildung eines entsprechenden Kolloids in Lösung reduziert werden. Auf diese Weise ist ein vergleichsweise geringer Partikeldurchmesser realisierbar, der wiederum eine geringe Schichtdicke der das wenigstens eine Metall enthaltenden Schicht ermöglicht.

Bei der Durchführung des Verfahrens werden z.B. Sedimentationsprobleme und Probleme, die auf einen zu großen Partikeldurchmesser zurückzuführen sind, wie eingeschränkte mechanische Belastbarkeit der Lebensmittelverpackung und eine zu große Schichtdicke der das wenigstens eine Metall enthaltenden Schicht, weitgehend und vorteilhafterweise und erfindungsgemäß dadurch vermieden, dass von einer Lösung eines entsprechenden Metallsalzes ausgegangen wird.

Bevorzugt wird ein entsprechendes Metallsalz dazu in einem organischen Lösungsmittel wie beispielsweise Tri- oder Diethylenglykol, bevorzugt Triethylenglykol, gelöst und auf eine Temperatur über 50°C, bevorzugt auf über 100°C bis 150°C erwärmt, woraufhin eine Reduktion eintritt, die durch Farbänderung der Lösung erkennbar ist. Wesentlich ist hierbei die Bildung von kolloiden Metallpartikeln, die in feinster Verteilung mit einer geringen Partikelgröße augenscheinlich in Form einer kolloidalen Suspension in der Lösung vorliegen. Die so reduzierte Lösung des Metallsalzes wird, auch aufgrund der vergleichsweise geringen Lagerstabilität von nur wenigen Tagen, vorzugsweise direkt weiterverarbeitet.

Die vorstehend beschriebene kolloidale Suspension mit einem Metallanteil von vorzugsweise 1 bis 3 Gew.-% wird dann über ein Entgasungsmodul in einen entsprechenden Extruder zudosiert. Hierdurch ist gewährleistet, dass der größte Teil/die Trägerflüssigkeit abdampfen kann, eine gleichmäßige Verteilung des Metalls in dem Polymer, das zur Herstellung der Metall enthaltenden Schicht verwendet wird, erfolgt und eine Blasenbildung vermieden wird. Eine eventuelle Agglomeration der Metallpartikel wird in einer bevorzugten Ausgestaltung des erfindungsgemäßen Verfahrens durch Zugabe eines Stabilisators zusätzlich verhindert. Als Stabilisator findet dabei bevorzugt das für Anwendungen im Lebensmittelbereich unbedenkliche Polyvinylpyrrolidon (PVP), geringste Mengen von Nattriumdodecylsulfat oder Mischungen derselben bevorzugt Verwendung. Besonders bevorzugt ist PVP.

Idealerweise erfolgt die Verarbeitung in einem Ein- oder Doppelschneckenextruder, wodurch eine besondes gute und gleichmäßige Verteilung des Metalls in dem Polymer errreicht wird.

Die Zugabe der Metallsuspension erfolgt, unter anderem in Abhängigkeit von dem für die Metall enthaltende Schicht gewählten Polymer, allgemein bei einer Temperatur von 150 bis 250°C, bevorzugt bei einer Temperatur von 180 bis 220°C.

Ohne sich an eine bestimmte Theorie zu binden wird davon ausgegangen, dass die vorteilhafte und überraschende Wirkung erfindungsgemäß dadurch erzielt wird, dass die in Lösung vorliegenden Metallionen reduziert und die entsehenden Metallkeime gleichzeitig kolloidal stabilisiert werden, so dass eine Suspension entsteht, die Metallteilchen oder -partikel im Nanometerbereich in feinster Verteilung aufweist.

Durch das Zudosieren dieser Suspension zu der Polymerschmelze bei gleichzeitigem Verdampfen des verwendeten Lösungsmittels wird eine entsprechende Feinstverteilung der Metallpartikel in der Polymerschicht erreicht. Wenn die das Metall enthaltende Schicht dann unter Umgebungsbedingungen Wasser aufnimmt, kommt es unter den vorherrschenden Bedingungen in der hergestellten Lebensmittelverpackung wieder zur Bildung von antimikrobiell wirksamen Metallionen, die aufgrund des Feuchtigkeitsgehalts der das Metall enthaltenden Schicht diffundieren und ihre antimikrobielle Wirkung entfalten können.

Es ist anzumerken, dass die vorteilhaften Wirkungen der vorliegenden Erfindung im wesentlichen auf der Feinstverteilung des Metalls in der Polymerschicht zurückzuführen sind. Hierzu ist es nicht notwendigerweise erforderlich, dass das Metall in ungeladenem Zustand vorliegt. Der Erfindungsgedanke kann z.B. auch dadurch verwirklicht werden, dass entsprechende Metallsalze, ohne sie zu reduzieren, in feinstverteilter Form aus einer Lösung in eine Polymerschicht eingebracht werden. Der Begriff "Metall", wie er im Rahmen der vorliegenden Erfindung verwendet wird, umfasst daher sowohl Kationen von antimikrobiell wirksamen Metallen, als auch deren ungeladene Form.

Die vorstehend allgemein beschriebene Erfindung wird nachfolgend anhand von Ausführungsbeispielen näher erläutert, wobei die Ausführungsbeispiele der Erfindung dem besseren Verständnis der Erfindung dienen.

### Beispiel 1

100 ml Diethylenglykol (DEG) werden zunächst bei 160°C unter Rückfluß erhitzt und auf Raumtemperatur abgekühlt. Darin wird 1 g AgNO₃ gelöst. Die Lösung wird anschließend in einem Wasserbad erwärmt. Die zunächst gelbliche Lösung schlägt oberhalb von ca. 50°C in eine hellgraue Färbung um, was als Indiz für die Bildung agglomerierter Silberpartikel anzusehen ist. Diese Lösung wird aufkonzentriert und einem Polymergranulat zugemischt und in einen Doppelschneckenextruder eingezogen und mittels Coextrusion zur Mittelschicht einer mehrlagigen Schlauchfolie verarbeitet.

### Beispiel 2

100 ml Triethylenglykol (TEG) werden zunächst eine Stunde unter Rückfluß erhitzt. Nach Abkühlen auf 150°C werde jeweils 5 ml einer 0,1 molaren AgNO₃-Lösung und einer 0,2 molaren Lösung von Polyvinylpyrrolidon (PVP mit einer Molmasse von 20.000) zeitgleich unter starkem Rühren langsam zudosiert. Die entstehende Suspenesion wird als Additiv während einer Schlauchextrusion so zugegeben, dass die Ag-Konzentration, bezogen auf das Polymergewicht der inneren Produkt berührenden Schicht 50 ppm beträgt. Die Zugabe erfolgt dabei bei einer Temperatur im Bereich von 180 bis 220°C.

### Beispiel 3

In 100 ml Triethylenglykol (TEG) werden bei 150°C 10 g PVP gelöst. Das PVP hat dabei eine Molmasse im Bereich von 6.000 bis 20.000. Nahfolgend werden in weiteren 100 ml TEG unter Rühren und Erwärmen sowie in Gegenwart des Tensids Natriumdodecylsulfat (1bis5 g) 1 bis 5 g AgNO₃ gelöst. Das Tensid kann einen Teil der gebildeten Silberkeime ausreichend stabilisieren und am weiteren Wachstum hindern. Der verbleibende Teil der Silberpartikel wächst zu gröberen Partikeln heran, die nach einer halben bis 24 Stunden, bevorzugt ein bis fünf Stunden, in einem zweiten Schritt durch Zugabe der PVP-TEG/PVP-Lösung durch Umhüllung ebenfalls stabilisiert werden.

Die entstehende bimodale Partikelgrößenverteilung führt in der Schlauchfolien-Anwendung zu einem starken Kurzzeiteffekt durch den Anteil der kleineren Partikel. Die gröbere Fraktion bewirkt dagegen aufgrund einer Art Depotwirkung eine Bakterienhemmung für Längere Zeiträume.

Die entstehende Suspension wird einem Polymer während einer Schlauchextrusion so zugegeben, dass die Konzentration des Silbers, bezogen auf die Poymermasse der inneren Produkt berührenden Schicht 50 bis 500 ppm beträgt, bevorzugt 100 bis 200 ppm. Die Zugabe erfolgt in einem Entgasungsmodul bei einer Temperatur im Bereich von 180 bis 220°C.

### Beispiel 4

Die antimikrobielle Wirksamkeit der erfindungsgemäßen Lebensmittelverpackung wurde an drei nach Beispiel 3 hergestellten Folien untersucht. Die Ergebnisse sind in der nachfolgenden Tabelle angegeben.

| | Folie 1 | Folie 2 | Folie 3 |
|---|---|---|---|
| Ag-Konzentration in der Produkt | 0 ppm | 320 ppm | 80 ppm |
| berührenden Schicht 0 Tage | 1,0 E + 04 | 1,0 E + 04 | 1,0 E + 04 |
| B akterienkonzentration nach 7 Tagen | 3,5 E + 04 | 1,25 E + 04 | 5,0 E + 04 |
| Bakterienkonzentration nach 14 Tagen | 2,98 E + 09 | 2,0 E + 07 | 3,8 E + 08 |
| Bakterienkonzentration nach 21 Tagen | 6,5 E + 10 | 3,5 E + 08 | 2,0 E + 08 |

## Patentansprüche

1. Ein- oder mehrschichtige, mittels eines Extrusionsverfahrens hergestellte Lebensmittelverpackung auf Kunststoffbasis, wobei die Schicht oder wenigstens eine der Schichten wenigstens ein antimikrobiell wirkendes Metall enthält, **dadurch gekennzeichnet, daß**
wenigstens ein Teil des antimikrobiell wirkenden Metalls in fein verteilter metallischer Form vorliegt und der verbleibende Teil in Form eines Salzes; wobei die Feinstverteilung des Metalls in der Polymerschicht erreicht wird, indem während des Extrusionsvorgangs das Metall in Form eines Kolloids als konzentrierte Suspension zur Polymerschmelze gegeben wird;
wobei als Ausgangssubstanz eine Lösung eines entsprechenden Metallsalzes in einem organischen Lösungsmittel verwendet wird; und
wobei die Lösung auf eine Temperatur von über 50 °C erwärmt wird und die Metallkationen unter Ausbildung des entsprechenden Kolloids in der Lösung reduziert werden.

2. Lebensmittelverpackung nach Anspruch 1, **dadurch gekennzeichnet, dass** das Metall ausgewählt ist aus der Gruppe, bestehend aus Ag, Cu, Sn, Zn und Mischungen derselben.

3. Lebensmittelverpackung nach Anspruch 1 oder 2, **dadurch gekennzeichnet, dass** sie einen mehrschichtigen Aufbau umfassend 3-, 5-, oder 7 Schichten.

4. Lebensmittelverpackung nach einem der vorhergehenden Ansprüche, **dadurch gekennzeichnet, dass** sie einen unsymmetrischen Aufbau auweist.

5. Lebensmittelverpackung nach Anspruch 1 bis 3, **dadurch gekennzeichnet, dass** das Metall in der dem Produkt zugewandten und/oder der dem Produkt abgewandten Schicht bzw. Schichten der Lebensmittelverpackung enthalten ist.

6. Lebensmittelverpackung nach einem der vorhergehenden Ansprüche, **dadurch gekennzeichnet, dass** es sich um Schlauchfolie oder Flachfolie handelt.

7. Lebensmittelverpackung nach einem der vorhergehenden Ansprüche, **dadurch gekennzeichnet, dass** das Metall in einem Gewichtsanteil von 50 bis 500 ppm in der metallhaltigen Schicht enthalten ist.

8. Lebensmittelverpackung nach einem der vorhergehenden Ansprüche, **dadurch gekennzeichnete, dass** die Lebensmittelverpackung oder wenigstens eine der Schichten derselben weiterhin einen Stabilisator enthält.

9. Lebensmittelverpackung nach Anspruch 7, **dadurch gekennzeichnet, dass** der Stabilisator ausgewählt ist aus Polyvinylpyrrolidon, Natriumdodecylsulfat und Mischungen derselben.

10. Lebensmittelverpackung nach einem der vorhergehenden Ansprüche, dadurch gekennzeichenet, dass die Schichten der Lebensmittelverpackung solche auf der Basis von Polyolefin, Haftmittel, EVOH, Polyvinylalkohol und/oder Polyamid sind.

11. Lebensmittelverpackung nach einem der vorhergehenden Ansprüche, **dadurch gekennzeichnet, dass** die Lebensmittelverpackung eine Dicke von insgesamt 10 bis 150 µm aufweist.

12. Lebensmittelverpackung nach einem der vorhergehenden Ansprüche, **dadurch gekennzeichnet, dass** die metallhaltige Schicht ein Dicke von 2 bis 50 µm aufweist.

## Claims

1. Single- or multi-layered, plastic-based food packaging produced by an extrusion process, wherein the layer or at least one of the layers comprises at least one antimicrobially active metal, **characterised in that** at least a part of the antimicrobially active metal is present in finely dispersed metallic form and the remaining part is in the form of a salt;
wherein the fine dispersion of the metal in the polymer layer is achieved in that the metal in the form of a colloid is added as a concentrated suspension to the polymer melt during the extrusion process;
wherein a solution of an appropriate metal salt in an organic solvent is used as the starting substance; and
wherein the solution is heated to a temperature above 50 °C and the metal cations are reduced to form the corresponding colloid in the solution.

2. Food packaging according to claim 1, **characterised in that** the metal is selected from the group consisting of Ag, Cu, Sn, Zn and mixtures thereof.

3. Food packaging according to claim 1 or 2, **characterised in that** it has a multi-layered structure containing 3, 5 or 7 layers.

4. Food packaging according to one of the preceding claims, **characterised in that** it possesses an unsymmetrical structure.

5. Food packaging according to claim 1 to 3, **characterised in that** the metal is comprised in the layer facing toward the product and/or in the layer or layers of the food packaging facing away from the product.

6. Food packaging according to one of the preceding claims, **characterised in that** it concerns tubular film or flat film.

7. Food packaging according to one of the preceding claims, **characterised in that** the metal is comprised in a weight fraction of 50 to 500 ppm in the metal-containing layer.

8. Food packaging according to one of the preceding claims, **characterised in that** the food packaging or at least one of the layers of it further comprises a stabiliser.

9. Food packaging according to claim 7, **characterised in that** the stabiliser is selected from polyvinyl pyrrolidone, sodium dodecyl sulfate and mixtures thereof.

10. Food packaging according to one of the preceding claims, **characterised in that** the layers of the food packaging are based on polyolefin, adhesive, EVOH, polyvinyl alcohol and/or polyamide.

11. Food packaging according to one of the preceding claims, **characterised in that** the overall thickness of the food packaging is from 10 to 150µm.

12. Food packaging according to one of the preceding claims, **characterised in that** the thickness of the metal-containing layer is from 2 to 50µm.

## Revendications

1. Emballage pour produits alimentaires à base de plastique, monocouche ou multicouche, fabriqué au moyen d'un procédé d'extrusion, dans lequel la couche ou au moins une des couches contient au moins un métal ayant une action antimicrobienne,
**caractérisé en ce**
**qu'**au moins une partie du métal ayant une action antimicrobienne est présente sous une forme métallique finement répartie, et en ce que la partie restante est présente sous la forme d'un sel ;
dans lequel la répartition ultra-fine du métal est atteinte dans la couche polymère, le métal étant ajouté, au cours de l'opération d'extrusion, sous la forme d'un colloïde en tant que suspension concentrée à la matière fondue polymère ;
dans lequel est utilisée, en tant que substance de départ, une solution d'un sel de métal correspondant dans un solvant organique ; et
dans lequel la solution est réchauffée à une température supérieure à 50 °C et les cations métalliques sont réduits en réalisant le colloïde correspondant dans la solution.

2. Emballage pour produits alimentaires selon la revendication 1, **caractérisé en ce que** le métal est choisi parmi le groupe constitué d'Ag, Cu, Sn, Zn et de mélanges de ces derniers.

3. Emballage pour produits alimentaires selon la revendication 1 ou 2, **caractérisé en ce qu'**il présente une structure multicouche comprenant 3, 5 ou 7 couches.

4. Emballage pour produits alimentaires selon l'une quelconque des revendications précédentes, **caractérisé en ce qu'**il présente une structure asymétrique.

5. Emballage pour produits alimentaires selon la revendication 1 à 3, **caractérisé en ce que** le métal est contenu dans la ou les couches, tournées vers le produit et/ou opposées au produit, de l'emballage pour produits alimentaires.

6. Emballage pour produits alimentaires selon l'une quelconque des revendications précédentes, **caractérisé en ce que** l'emballage est un film tubulaire ou un film plat.

7. Emballage pour produits alimentaires selon l'une quelconque des revendications précédentes, **caractérisé en ce que** le métal est contenu en une proportion en poids allant de 50 à 500 ppm dans la couche contenant du métal.

8. Emballage pour produits alimentaires selon l'une quelconque des revendications précédentes, **caractérisé en ce que** l'emballage pour produits alimentaires ou au moins une des couches de ce dernier contient par ailleurs un stabilisant.

9. Emballage pour produits alimentaires selon la revendication 7, **caractérisé en ce que** le stabilisant est choisi parmi la polyvinylpyrrolidone, le sulfate dodécylique de sodium et des mélanges de ces derniers.

10. Emballage pour produits alimentaires selon l'une quelconque des revendications précédentes, **caractérisé en ce que** les couches de l'emballage pour produits alimentaires sont des couches du type à base de polyoléfine, d'agent promoteur d'adhérence, d'EVOH, d'alcool polyvinylique et/ou de polyamide.

11. Emballage pour produits alimentaires selon l'une quelconque des revendications précédentes, **caractérisé en ce que** l'emballage pour produits alimentaires présente une épaisseur totale allant de 10 à 150 µm.

12. Emballage pour produits alimentaires selon l'une quelconque des revendications précédentes, **caractérisé en ce que** la couche contenant du métal présente une épaisseur allant de 2 à 50 µm.
